# EUROPEAN PATENT APPLICATION

(11) **EP 4 751 884 A1**
(43) Date of publication of application: **03.06.2026**
(21) Application number: 24858553.1
(22) Date of filing: 27.08.2024
(51) Int. Cl.: B29C 64/209, B29C 64/20, B29C 64/245, B29C 64/295, B29C 64/227, B29C 64/321, B29C 64/343, B33Y 30/00, B33Y 40/00

(54) **HOT END STRUCTURE, PRINTING HEAD OF THREE-DIMENSIONAL PRINTER, AND THREE-DIMENSIONAL PRINTER**

(30) Priority: 29.08.2023 CN 202311115060
(71) Applicant: Shenzhen Tuozhu Technology Co., Ltd., Shenzhen, Guangdong 518000 (CN)
(72) Inventor: HUANG, Hongsheng, Shenzhen, Guangdong 518000 (CN); LV, Qingshuo, Shenzhen, Guangdong 518000 (CN)
(74) Representative: Grünecker Patent- und Rechtsanwälte PartG mbB
(86) International application number: PCT/CN2024/114726
(87) International publication number: WO 2025/045017

(57) **Abstract**

A hot end structure (10), a printing head of a three-dimensional printer, and a three-dimensional printer. The hot end structure comprises: a hot end assembly (100), comprising a heat dissipation fin (110), a throat pipe (120), a heating block (130), and a nozzle (140) that are connected in sequence; a heating seat assembly (200), used for heating the heating block (130); and a fixing assembly (300), used for detachably connecting the hot end assembly (100) and the heating seat assembly (200), wherein when the hot end assembly (100) is connected to the heating seat assembly (200), the heating block (130) is fixedly attached to the heating seat assembly (200). The hot end assembly (100) and the heating seat assembly (200) are detachably connected by means of the fixing assembly (300), thereby facilitating maintenance and replacement of hot ends.

## Description

The present application claims priority to Chinese Patent Application No. 2023111150603, filed with the China National Intellectual Property Administration on August 29, 2023, and entitled "HOT END STRUCTURE, PRINTING HEAD OF THREE-DIMENSIONAL PRINTER, AND THREE-DIMENSIONAL PRINTER", the content of which is incorporated herein by reference in its entirety.

### TECHNICAL FIELD

The present application relates to the field of three-dimensional printers, and in particular, to a hot end structure, a printing head of a three-dimensional printer, and a three-dimensional printer.

### BACKGROUND

A 3D printer, also known as a three-dimensional printer or a stereoscopic printer, is a process equipment for rapid prototyping. The 3D printing technology that can be currently adopted by a 3D printer is fused deposition modeling (FDM). FDM is a technology based on digital models for constructing three-dimensional objects using materials like powdered metal or plastic through layer-by-layer printing. In a specific implementation, the three-dimensional printer adopting the FDM technology supplies hot melt filamentous materials of an apparatus to a hot end of the three-dimensional printer by a feeding mechanism, and the hot melt filamentous materials are heated to a molten state in the hot end. The hot end can extrude the materials in a molten state to a print panel while moving along a printing path of the three-dimensional printer, and a three-dimensional object can be printed layer by layer.

The filament hot end typically includes a heat dissipation region, a throat pipe region, and a heating region. The throat pipe has a heat insulation function. In the related art, the filament hot end has high maintenance frequency and replacement frequency, which causes great trouble to users and maintenance personnel. In addition, the hot end is mounted such that the heat dissipation region is fixedly connected to the printing head body, forming a long cantilever structure, where the throat pipe is the weakest part of the structure when bearing stress, thus imposing higher requirements on the stress-bearing capacity of the throat pipe.

### SUMMARY

In view of the above problems, embodiments of the present application are proposed to provide a hot end structure, a printing head of a three-dimensional printer, and a three-dimensional printer that overcome the above problems or at least partially solve the above problems.

According to a first aspect of the present application, the embodiments of the present application disclose a hot end structure, including:
a hot end assembly, including a heat dissipation fin, a throat pipe, a heating block, and a nozzle that are connected in sequence;
a heating seat assembly, configured to heat the heating block; and
a fixing assembly, configured to detachably connect the hot end assembly to the heating seat assembly, where in the case that the hot end assembly is connected to the heating seat assembly, the heating block is fixedly attached to the heating seat assembly.

Optionally, the fixing assembly is rotatably connected to the heating seat assembly; in the case that the fixing assembly rotates to a first preset position, the fixing assembly presses the heating block to be attached to the heating seat assembly.

Optionally, in the case that the fixing assembly rotates to a second preset position, the heating block can be separated from the heating seat assembly.

Optionally, the heating seat assembly is configured to be fixedly connected to the three-dimensional printing head body.

Optionally, the heating seat assembly is fixedly connected to the three-dimensional printing head body through a metal screw, the heat dissipation fin is provided with a magnetic element, and in the case that the hot end assembly is fixedly connected to the heating seat assembly, the magnetic element attracts the metal screw and is attached to a head of the metal screw.

Optionally, the heating block has a first plane, and the first plane is attached to a second plane of the heating seat assembly.

Optionally, a first limit structure is provided on a plane of the heating seat assembly, and in the case that the first plane is attached to the second plane, the first limit structure abuts against an edge of the first plane, for limiting relative movement between the heating block and the heating seat assembly in at least one direction parallel to the first plane.

Optionally, a second limit structure is provided on the first plane, and in the case that the first plane is attached to the second plane, the second limit structure abuts against an edge of the second plane, for limiting relative movement between the heating block and the heating seat assembly in at least one direction parallel to the first plane.

Optionally, the fixing assembly includes:
a buckle member, rotatably connected to the heating seat assembly, where when the buckle member rotates to the first preset position, the buckle member is locked and presses the heating block to be attached to the heating seat assembly.

Optionally, the fastening member includes:
a first pressing block, rotatably connected to the heating seat assembly; and
a first wire spring, rotatably connected to the heating seat assembly, where the rotating shaft of the first pressing block and the rotating shaft of the first wire spring are parallel and located on both sides of the plane of the heating seat assembly attached to the heating block,
where when the first pressing block and the first wire spring rotate close to each other to the first preset position, the first pressing block and the first wire spring are buckled, the first wire spring limits movement of the first pressing block, and the first pressing block presses the heating block.

Optionally, the heating seat assembly includes:
a fixing seat, configured to be fixedly connected to the three-dimensional printing head body, where
the fixing seat is made of a heat-insulating and high-temperature-resistant material; and
a heating seat, fixedly connected to the fixing seat and detachably connected to the hot end assembly.

Optionally, the hot end assembly being detachably connected to the heating seat assembly includes: the heating block being detachably connected to the heating seat assembly.

Optionally, the heat dissipation fin is detachably connected to the three-dimensional printing head body.

In a second aspect of the present application, the embodiments of the present application disclose a three-dimensional printing head, including the hot end structure and the three-dimensional printing head body as described above.

In a third aspect of the present application, the embodiments of the present application disclose a three-dimensional printer, including the three-dimensional printing head as described above, a print table, and a driving apparatus, where the three-dimensional printing head is arranged above the print table, the driving apparatus is configured to drive the three-dimensional printing head to generate a relative displacement with the print table, and the three-dimensional printing head is configured to extrude a material to print a model.

The embodiments of the present application have at least one of the following advantages:
In the embodiments of the present application, the hot end assembly and the heating seat assembly are detachably connected by the fixing assembly, which facilitates the maintenance and replacement of the hot end. Moreover, since the heating seat assembly is configured to be fixedly connected to the three-dimensional printing head body, the hot end assembly is connected to the printing head body in a heating region, such that the stress on the throat pipe can be reduced, and the possibility of damage to the hot end structure caused by bending due to the stress can be reduced.

### BRIEF DESCRIPTION OF THE DRAWINGS

FIG. 1 is a schematic structural diagram 1 of a hot end structure according to an embodiment of the present application;
FIG. 2 is a schematic diagram of a hot end assembly of a hot end structure according to an embodiment of the present application;
FIG. 3 is a schematic structural diagram 2 of a hot end structure according to an embodiment of the present application;
FIG. 4a is a schematic structural diagram 1 of another hot end structure according to an embodiment of the present application;
FIG. 4b is a schematic structural diagram 2 of another hot end structure according to an embodiment of the present application;
FIG. 4c is a schematic structural diagram 3 of another hot end structure according to an embodiment of the present application;
FIG. 4d is a schematic structural diagram 4 of another hot end structure according to an embodiment of the present application;
FIG. 5 is a schematic structural diagram of yet another hot end structure according to an embodiment of the present application;
FIG. 6 is a schematic structural diagram of still another hot end structure according to an embodiment of the present application;
FIG. 7 is a schematic structural diagram 3 of a hot end structure according to an embodiment of the present application;
FIG. 8 is a schematic structural diagram of a three-dimensional printing head according to an embodiment of the present application; and
FIG. 9 is a schematic structural diagram of a three-dimensional printer according to an embodiment of the present application.

Description of reference numerals: 100-hot end assembly, 110-heat dissipation fin, 111-magnetic element, 120-throat pipe, 130-heating block, 131-second limit structure, 140-nozzle, 200-heating seat assembly, 210-fixing seat, 220-heating seat, 230-temperature measuring assembly, 300-fixing assembly, 310-buckle member, 311-first sheet metal part, 312-second wire spring, 313-second sheet metal part, 314-L-shaped wire spring, 315-first pressing block, 316-first wire spring, 317-clamping cam, 318-cam handle;
10-hot end structure, 12-first guide rail, 13-second guide rail, 14-third guide rail, 20-three-dimensional printing head body, 31-print panel, 32-hot bed, 33-base;
1-three-dimensional printing head, 2-driving apparatus, 3-print table, 4-feeding apparatus.

### DETAILED DESCRIPTION

Implementations of the technical solutions of the present application are further described in detail below with reference to the accompanying drawings.

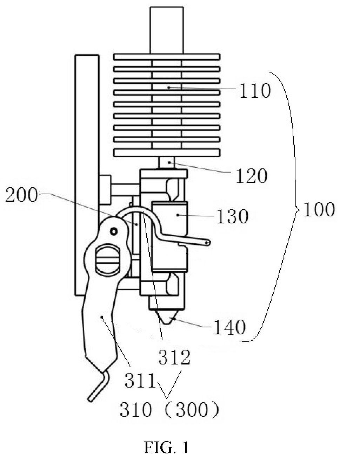

FIG. 1 is a schematic structural diagram 1 of a hot end structure according to an embodiment of the present application. The hot end structure may specifically include the following components:
a hot end assembly 100, including a heat dissipation fin 110, a throat pipe 120, a heating block 130, and a nozzle 140 that are connected in sequence;
a heating seat assembly 200, configured to heat the heating block 130; and
a fixing assembly 300, configured to detachably connect the hot end assembly 100 to the heating seat assembly 200, where in the case that the hot end assembly 100 is connected to the heating seat assembly 200, the heating block 130 is fixedly attached to the heating seat assembly 200.

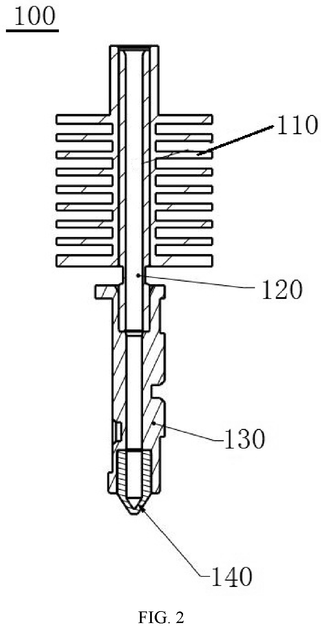

In the embodiments of the present application, the hot end structure includes three parts: the hot end assembly 100, the heating seat assembly 200, and the fixing assembly 300. Referring to FIG. 2, the hot end assembly 100 includes the heat dissipation fin 110, the throat pipe 120, the heating block 130, and the nozzle 140 connected in sequence. The heat dissipation fin 110 dissipates the heat in the heating assembly into the air on the basis of the tip heat release effect. The throat pipe 120 guides the filament, the heating block 130 heats the filament to a molten state, and the nozzle 140 extrudes the filament in the molten state to print a model.

The heating seat assembly 200 may be connected to the heating block 130, and heat the heating block 130 when connected to the heating block 130, such that the heating block 130 may heat the filament.

The fixing assembly 300 may detachably connect the hot end assembly 100 to the heating seat assembly 200, that is, under the action of the fixing assembly 300, the hot end assembly 100 may be fixedly connected to the heating seat assembly 200, and in the case that the fixing assembly 300 is released, the hot end assembly 100 may be separated from the heating seat assembly 200. The connection between the hot end assembly 100 and the heating seat assembly 200 refers to the connection between the heating block 130 and the heating seat assembly 200. In the case that the hot end assembly 100 is connected to the heating seat assembly 200, the heating block 130 is fixedly attached to the heating seat assembly 200. The heating block 130 and the heating seat assembly 200 form a large heat transfer area, such that the heat on the heating seat assembly 200 can be transferred to the heating block 130 more efficiently. In addition, the heating block 130 is attached to a heating seat 220, with the heating block 130 serving as a stress-bearing region. The connection between the fixing assembly 300 and the heating block 130 shortens the length of the cantilever structure, reduces the stress on the throat pipe, and thus can avoid the deformation of the hot end assembly 100.

In the embodiments of the present application, the hot end assembly 100 includes the heat dissipation fin 110, the throat pipe 120, the heating block 130, and the nozzle 140 that are connected in sequence; the heating seat assembly 200 is configured to heat the heating block 130; and the fixing assembly 300 is configured to detachably connect the hot end assembly 100 to the heating seat assembly 200, where in the case that the hot end assembly 100 is connected to the heating seat assembly 200, the heating block 130 is fixedly attached to the heating seat assembly 200. The hot end assembly 100 is detachably connected to the heating seat assembly 200 by the fixing assembly 300, which facilitates the maintenance and replacement of the hot end assembly 100. Moreover, since the heating seat assembly 200 is configured to be fixedly connected to the three-dimensional printing head body, the hot end assembly 100 is connected to the printing head body at the heating block 130, such that the stress on the throat pipe 120 can be reduced, and the possibility of damage to the hot end assembly 100 caused by bending due to the stress can be reduced.

In an optional implementation of the embodiments of the present application, referring to FIG. 1, the fixing assembly 300 is rotatably connected to the heating seat assembly 200; in the case that the fixing assembly 300 rotates to a first preset position, the fixing assembly 300 presses the heating block 130 to be attached to the heating seat assembly 200.

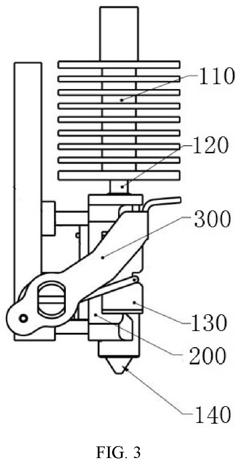

In the embodiments of the present application, the fixing assembly 300 may be rotatably connected to the heating seat assembly 200, and the fixing assembly 300 may rotate around the axis thereof. In the case that the fixing assembly 300 rotates to the first preset position, the fixing assembly 300 may press the heating block 130 to be attached to the heating seat assembly 200. The first preset position may be determined on the basis of the type of the fixing assembly 300. For example, when the fixing assembly 300 is in a left-right fixing manner, the first preset position corresponds to one of angles of rotation along the left and right sides. For another example, when the fixing assembly 300 is in an up-down fixing manner, the first preset position corresponds to one of angles of rotation along the upper and lower ends. For example, as shown in FIG. 3, the first preset position is the highest rotational position of the fixing assembly 300 on the heating seat assembly 200. When the fixing assembly 300 rotates to the highest rotational position, the heating block 130 is pressed to be attached to the heating seat assembly 200. In this way, the heating seat assembly 200 may heat the heating block 130 more efficiently.

In addition, in the case that the fixing assembly 300 rotates to a second preset position, the heating block 130 can be separated from the heating seat assembly 200.

In the embodiments of the present application, the fixing assembly 300 may further rotate to the second preset position. The second preset position corresponds to the first preset position, and the second preset position may be determined on the basis of the type of the fixing assembly 300. For example, when the fixing assembly 300 is in a left-right fixing manner, the second preset position corresponds to one of angles of rotation along the left and right sides. For another example, when the fixing assembly 300 is in an up-down fixing manner, the first preset position corresponds to one of angles of rotation along the upper and lower ends. When the fixing assembly 300 rotates to the second preset position, the heating block 130 is separated from the heating seat assembly 200, such that the heating block 130 can be separated from the heating seat assembly 200 without removing the screw. As shown in FIG. 1, when the fixing assembly 300 rotates to the lowest rotational position, the heating block 130 is separated from the heating seat assembly 200.

In an optional implementation of the embodiments of the present application, the heating seat assembly 200 is configured to be fixedly connected to the three-dimensional printing head body. The three-dimensional printing head refers to a printing head of a three-dimensional printer. Therefore, the hot end assembly 100 is connected to the printing head body at the heating block 130, such that the length of the cantilever structure can be reduced, thereby reducing the stress on the throat pipe 120, and reducing the possibility of damage to the hot end assembly 100 caused by bending due to the stress.

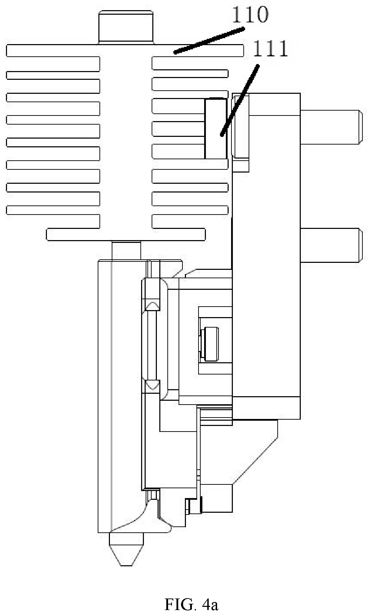

In an optional implementation of the embodiments of the present application, referring to FIG. 4a, the heating seat assembly 200 is fixedly connected to the three-dimensional printing head body through a metal screw, and the heat dissipation fin 110 is provided with a magnetic element 111. In the case that the hot end assembly 100 is fixedly connected to the heating seat assembly 200, the magnetic element attracts the metal screw and is attached to the head of the metal screw.

The heating seat assembly 200 is fixedly connected to the three-dimensional printing head body through the metal screw, the metal screw passes through the three-dimensional printing head body and the heating seat assembly 200 for fixedly connecting the three-dimensional printing head body and the heating seat assembly, and the heating seat assembly 200 is provided with a corresponding hole for connection with the metal screw. The heat dissipation fin 110 is provided with the magnetic element, and the magnetic element may be a permanent magnet or an electromagnet, which is not limited in the embodiments of the present application. In the case that the hot end assembly 100 is fixedly connected to the heating seat assembly 200, the magnetic element is attached to the head of the metal screw on the basis of the magnetic field thereof. This method enhances the pre-positioning effect before the hot end assembly 100 and the heating seat assembly are mounted, facilitating the mounting of the hot end assembly.

In an optional implementation of the embodiments of the present application, the heating block 130 has a first plane, and the first plane is attached to a second plane of the heating seat assembly 200.

The heating block 130 has a first plane, and the first plane is a flat plane. Accordingly, the heating seat assembly 200 has a second plane matching the first plane. When the heating seat assembly 200 is attached to the heating block 130, that is, when the first plane is attached to the second plane, heat is transferred through contact between the first plane and the second plane. The heat is transferred on the basis of surface contact, which can improve the efficiency of heat transfer.

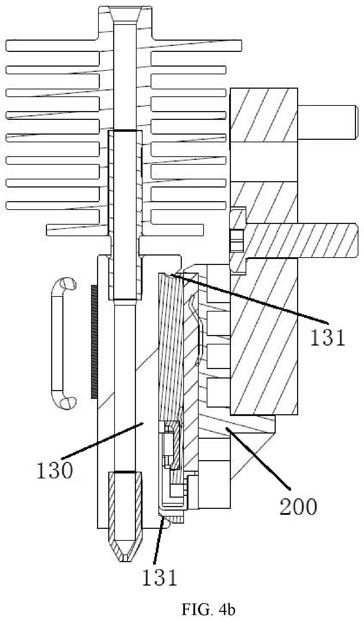

In an optional implementation of the embodiments of the present application, referring to FIG. 4b, a first limit structure is provided on a plane of the heating seat assembly 200, and in the case that the first plane is attached to the second plane, the first limit structure abuts against an edge of the first plane, for limiting relative movement between the heating block 130 and the heating seat assembly 200 in at least one direction parallel to the first plane. This method can not only improve the pre-positioning effect during the mounting, but also enhance the positioning effect after the mounting.

A first limit structure may be provided on a plane (which may be the second plane) of the heating seat assembly 200, and the first limit structure may be a shape-based limiting structure or a limiting-member-based limiting mechanism, which is not limited in the embodiments of the present application.

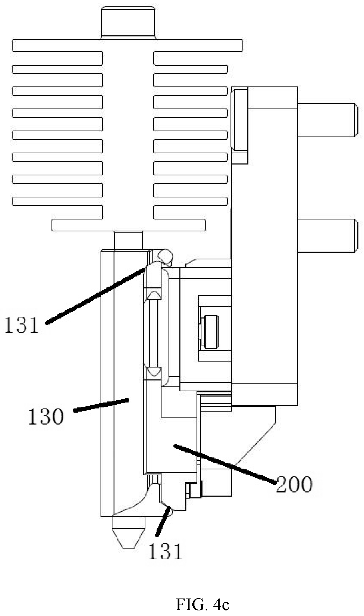

In an optional implementation of the embodiments of the present application, referring to FIG. 4c, a second limit structure 131 is provided on the first plane, and in the case that the first plane is attached to the second plane, the second limit structure 131 abuts against an edge of the second plane, for limiting relative movement between the heating block 130 and the heating seat assembly 200 in at least one direction parallel to the first plane. This method can not only improve the pre-positioning effect during the mounting, but also enhance the positioning effect after the mounting.

Optionally, a direction of relative movement limited by the first limit structure and a direction of relative movement limited by the second limit structure 131 may be perpendicular to each other.

In an optional implementation of the embodiments of the present application, the fixing assembly 300 includes:
a buckle member 310 rotatably connected to the heating seat assembly 200, where when the buckle member 310 rotates to the first preset position, the buckle member 310 is locked and presses the heating block 130 to be attached to the heating seat assembly 200.

In the embodiments of the present application, the fixing assembly 300 may include a buckle member 310, and the fastening member 310 is rotatably connected to the heating seat assembly 200. When the fastening member 310 rotates to the first preset position, the buckle member is snap-fitted and locked, and presses the heating block 130 to be attached to the heating seat assembly 200, so as to fix the heating block 130 and the heating seat assembly 200.

In an optional implementation of the embodiments of the present application, the heating block 130 is provided with a groove.

The buckle member 310 includes:
a first sheet metal part 311 rotatably connected to the heating seat assembly 200; and
a second wire spring 312 rotatably connected to the first sheet metal part 311, where the rotating shaft of the first sheet metal part 311 is parallel to but not coincident with the rotating shaft of the second wire spring 312.

When the first sheet metal part 311 rotates, the second wire spring 312 is driven to be buckled into the groove, and when the first sheet metal part rotates to the first preset position, the second wire spring 312 presses the heating block 130 by means of an elastic force thereof.

Referring to FIG. 1, the heating block 130 is provided with a groove, and an extension direction of the groove is perpendicular to an axial direction of a filament channel in the hot end assembly 100. For example, when the filament feeding channel in the hot end assembly 100 is in a vertical direction, the groove extends in a horizontal direction. The buckle member 310 includes a first sheet metal part 311 and a second wire spring 312. The first sheet metal part 311 is rotatably connected to the heating seat assembly 200, and the first sheet metal part 311 rotates on the heating seat assembly 200 between the first preset position and the second preset position. The extension direction of the second wire spring 312 matches that of the groove. The second wire spring 312 is rotatably connected to the first sheet metal part 311, where the rotating shaft of the first sheet metal part 311 is parallel to but not coincident with the rotating shaft of the second wire spring 312. When the first sheet metal part 311 rotates, the second wire spring 312 is driven to be buckled into the groove, and when the first sheet metal part rotates to the first preset position, the second wire spring 312 presses, by means of an elastic force thereof, the heating block 130 to be connected to the heating seat assembly 200, allowing the heating block 130 to be attached to the heating seat assembly 200.

When the first sheet metal part 311 rotates to the second preset position, the second wire spring 312 does not press the heating block 130, such that the heating block 130 is separated from the heating seat assembly 200.

In an optional implementation of the embodiments of the present application, the side of the plane of the heating seat assembly 200 attached to the heating block 130 is provided with a connecting hole, and the other side is provided with a groove portion.

The buckle member 310 includes:
an L-shaped wire spring 314, where a first straight end of the L-shaped wire spring 314 is connected to the connecting hole, such that the L-shaped wire spring 314 is rotatably connected to the heating seat assembly 200; and
a second sheet metal part 313, where the second sheet metal part 313 is rotatably connected to the first straight end of the L-shaped wire spring 314, and the rotating shaft of the second sheet metal part 313 is parallel to but not coincident with the rotating shaft of the L-shaped wire spring 314.

When the second sheet metal part 313 rotates to the first preset position, the end of the second sheet metal part 313 away from the first straight end is embedded into the groove portion, such that the second sheet metal part 313 presses the heating block 130, and a second straight end of the L-shaped wire spring abuts against the second sheet metal part 313, and presses, by means of an elastic force thereof, the end of the second sheet metal part 313 embedded into the groove portion into the groove portion.

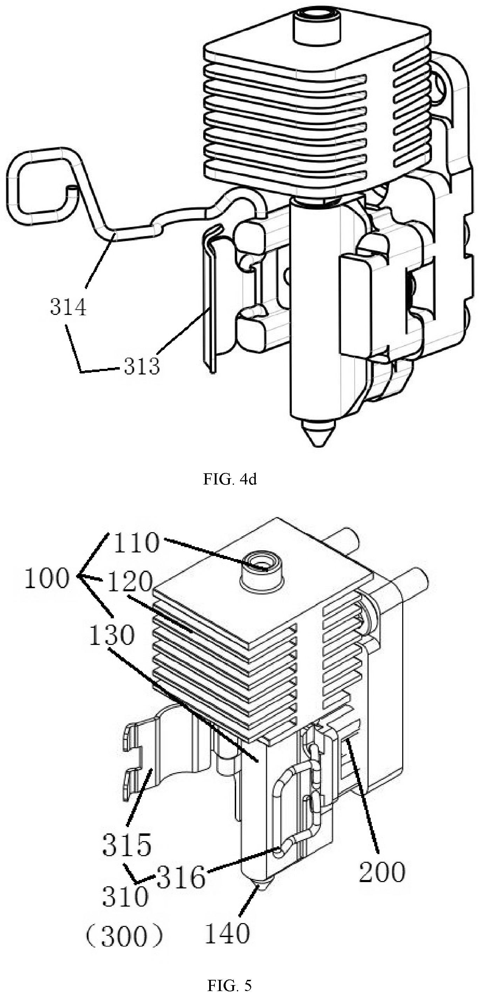

Referring to FIG. 4d, the side of the plane of the heating seat assembly 200 attached to the heating block 130 is provided with a connecting hole, and the other side is provided with a groove portion.

The fastening member 310 includes: a second sheet metal part 313 and an L-shaped wire spring 314. The L-shaped wire spring 314 includes two straight ends perpendicular to each other, a first straight end and a second straight end. The first straight end is connected to the connecting hole, such that the L-shaped wire spring 314 can be rotatably connected to the heating seat assembly 200. Specifically, the first end of the L-shaped wire spring 314 can pass through the connecting hole, and the L-shaped wire spring 314 can rotate freely along the axis of the connecting hole. The second sheet metal part 313 is rotatably connected to the first straight end of the L-shaped wire spring 314, and the rotating shaft of the second sheet metal part 313 is parallel to but not coincident with the rotating shaft of the L-shaped wire spring 314. The second straight end of the L-shaped wire spring 314 may be used as an operation handle, to facilitate user operation.

When the second sheet metal part 313 rotates to the first preset position, the end of the second sheet metal part 313 away from the first straight end is embedded into the groove portion, such that the second sheet metal part 313 and the L-shaped wire spring 314 press the heating block 130 on the basis of an elastic force thereof, allowing the heating block 130 to be attached to the heating seat assembly 200. When the second sheet metal part 313 rotates to the second preset position, the second sheet metal part 313 releases the hot end assembly 100, such that the heating block 130 is separated from the heating seat assembly 200.

In an optional implementation of the embodiments of the present application, the buckle member 310 includes:
a first pressing block 315 rotatably connected to the heating seat assembly 200; and
a first wire spring 316 rotatably connected to the heating seat assembly 200, where the rotating shaft of the first pressing block 315 and the rotating shaft of the first wire spring 316 are parallel and located on both sides of the plane of the heating seat assembly 200 attached to the heating block 130.

When the first pressing block 315 and the first wire spring 316 rotate close to each other to the first preset position, the first pressing block 315 and the first wire spring 316 are buckled, the first wire spring 316 limits movement of the first pressing block 315, and the first pressing block 315 presses the heating block 130.

In the embodiments of the present application, referring to FIG. 5, the fastening member may include a first pressing block 315 and a first wire spring 316. The first pressing block 315 is rotatably connected to the heating seat assembly 200, and the first wire spring 316 is rotatably connected to the heating seat assembly 200. The rotating shaft of the first pressing block 315 and the rotating shaft of the first wire spring 316 are parallel and located on both sides of the plane of the heating seat assembly 200 attached to the heating block 130. As shown in FIG. 5, the rotating shaft of the first pressing block 315 is located on the left side of the plane of the heating seat assembly 200 attached to the heating block 130, the rotating shaft of the first wire spring 316 is located on the right side of the plane of the heating seat assembly 200 attached to the heating block 130, and the rotating shaft of the first pressing block 315 and the rotating shaft of the first wire spring 316 are parallel.

When the first pressing block 315 and the first wire spring 316 rotate close to each other to the first preset position, the first pressing block 315 and the first wire spring 316 are buckled, the first wire spring 316 limits the movement of the first pressing block 315, and the first pressing block 315 presses the heating block 130, such that the heating block 130 is attached to the heating seat assembly 200. When the first pressing block 315 and the first wire spring 316 rotate away from each other, the first pressing block 315 and the first wire spring 316 are unbuckled, and the first pressing block 315 does not apply a force to the heating block 130, such that the heating block 130 is separated from the heating seat assembly 200.

In an optional implementation of the embodiments of the present application, the buckle member 310 includes a clamping cam 317 and a cam handle 318 that are fixedly connected.

When the cam handle 318 rotates to the first preset position, the cam handle 318 drives the clamping cam 317 to press the heating block 130.

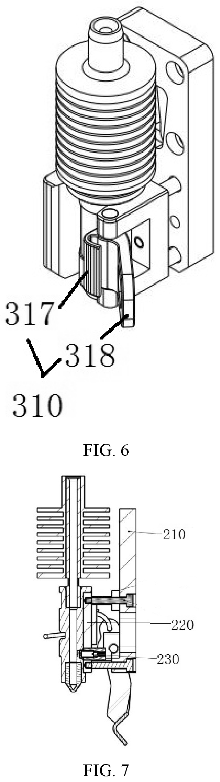

In the embodiments of the present application, referring to FIG. 6, the buckle member 310 includes a clamping cam 317 and a cam handle 318 that are fixedly connected. Specifically, the clamping cam 317 and the cam handle 318 may be of an integrated structure. When the cam handle 318 rotates to the first preset position, the cam handle 318 drives the clamping cam 317 to press the heating block 130, such that the heating block 130 is attached to the heating seat assembly 200. When the cam handle 318 rotates to the second preset position, the clamping cam 317 does not apply a force to the hot end assembly 100, such that the heating block 130 is separated from the heating seat assembly 200.

In an optional implementation of the embodiments of the present application, the heating seat assembly 200 includes:
a fixing seat 210, configured to be fixedly connected to the three-dimensional printing head body, where the fixing seat 210 is made of a heat-insulating and high-temperature-resistant material; and
a heating seat 220, fixedly connected to the fixing seat 210 and detachably connected to the hot end assembly 100.

In an optional implementation of the embodiments of the present application, the hot end assembly being detachably connected to the heating seat assembly includes: the heating block being detachably connected to the heating seat assembly.

In an optional implementation of the embodiments of the present application, the heat dissipation fin is detachably connected to the three-dimensional printing head body.

In an optional implementation of the embodiments of the present application, the heat dissipation fin is provided with a filament entry, and the filament entry is an annular protrusion configured to be inserted into a filament exit of the three-dimensional printing head body. In this way, the connection between the hot end structure and the three-dimensional printing head body is stable, and the conveying of the filament is stable.

In the embodiments of the present application, referring to FIGs. 5 and 7, the heating seat assembly 200 may include a fixing seat 210 and a heating seat 220. The fixing seat 210 is fixedly connected to the three-dimensional printing head body to provide a support point for the overall installation. The fixing seat 210 is made of a heat-insulating and high-temperature-resistant material, such that after the fixing seat 210 is connected to the heating seat 220, the use performance of the fixing seat is not affected under a high temperature condition. The heating seat 220 is fixedly connected to the fixing seat 210, and is detachably connected to the hot end assembly 100 through the fixing assembly 300. When the heating seat is fixedly connected to the hot end assembly 100, the heating block 130 in the hot end assembly 100 is heated.

In an optional implementation of the embodiments of the present application, the heating seat 220 includes:
a heating seat body attached to the hot end assembly 100; and
a heater located between the fixing seat 210 and the heating seat body and closely attached to the heating seat body for heating the heating seat body.

Specifically, the heating seat 220 includes the heating seat body and the heater. The heating seat body is attached to the hot end assembly 100. Specifically, the heating seat body is attached to the heating block 130. The heater is located between the heating seat body and the fixing seat 210 and closely attached to the heating seat body for heating the heating seat body, and then the heating seat body transfers the heat to the heating block 130, such that the heating block 130 is heated, and the heating block 130 heats a filament.

In an optional implementation of the embodiments of the present application, the heating seat 220 further includes:
a temperature measuring assembly 230 located between the fixing seat 210 and the heating seat body for detecting the temperature of the heating seat body.

At least one temperature measuring assembly 230 may also be arranged between the fixing seat 210 and the heating seat body, and the temperature measuring assembly 230 may detect a temperature of the heating seat body, and control, on the basis of the temperature, a temperature for heating the filament, such that the heating of the filament may be controlled more stably.

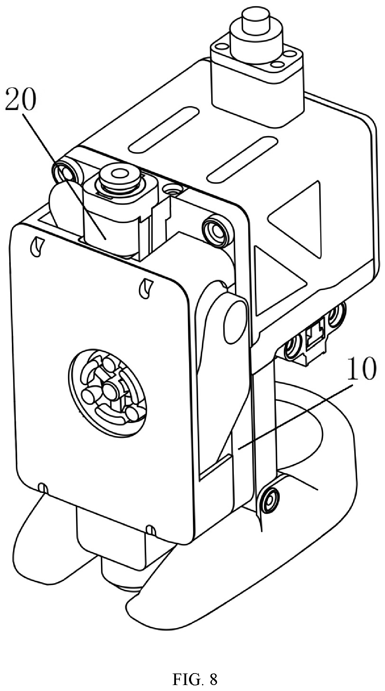

Referring to FIG. 8, a schematic structural diagram of a three-dimensional printing head according to an embodiment of the present application is shown. The embodiments of the present application further disclose a three-dimensional printing head, including the hot end structure 10 and the three-dimensional printing head body 20 as described above.

In the embodiments of the present application, the three-dimensional printing head includes the hot end structure 10 and the three-dimensional printing head body 20, and the hot end structure 10 is fixedly connected to the three-dimensional printing head body 20.

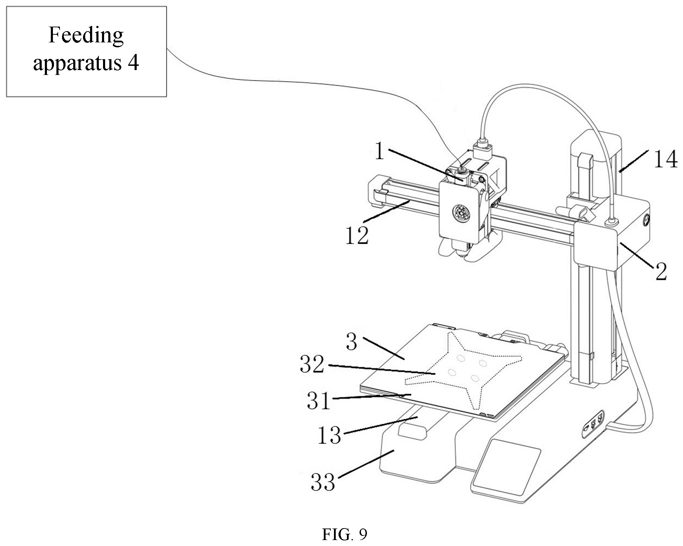

Referring to FIG. 9, a schematic structural diagram of a three-dimensional printer according to an embodiment of the present application is shown. The three-dimensional printer includes: the above three-dimensional printing head 1, a print table 3, and a driving apparatus 2, where the three-dimensional printing head 1 is arranged above the print table 3, and the driving apparatus 2 is configured to drive the three-dimensional printing head 1 to generate a relative displacement with the print table 3.

The three-dimensional printing head 1 is arranged above the print table 3 and is configured to extrude a printing material (filament) heated and melted into a molten state. A feeding apparatus 4 is connected to a feed end of the three-dimensional printing head 1 to provide the filament for the three-dimensional printing head 1, and the driving apparatus 2 drives the three-dimensional printing head 1 to generate a relative displacement with the print table 3, so as to print or construct a three-dimensional model.

The three-dimensional printing head 1 includes a hot end structure 10 and a three-dimensional printing head body 20. The three-dimensional printing head body 20 includes a feeding assembly and an extrusion assembly arranged between the feeding assembly and the hot end structure 10. During the feeding process of the feeding apparatus 4, a printing material enters the extrusion assembly after passing through the feeding assembly, and the extrusion assembly provides the printing material to the hot end structure 10. During the retracting process of the feeding apparatus 4, the three-dimensional printer cuts off the printing material in the three-dimensional printing head 1, the extrusion assembly returns the printing material to the feeding apparatus 4, and a loading and unloading assembly in the feeding apparatus 4 rewinds the returned printing material to the filament spool.

Optionally, the three-dimensional printer may, for example, cut off a printing material between the extrusion assembly and the hot end structure 10, cut off a printing material in the extrusion assembly, or the like. The present application does not limit the position where the three-dimensional printer cuts off the printing material.

Exemplarily, the three-dimensional printer further includes a print panel 31, a hot bed 32, and a base 33. The hot bed 32 is arranged on the side of the base 33 facing the hot end structure 10, and the hot bed 32 has a heating function. The print panel 31 is arranged on the side of the hot bed 32 facing the hot end structure 10, the heat of the hot bed 32 can be conducted to the print panel 31, and the hot end structure 10 can extrude a printing material in a molten state on the print panel 31.

In a specific implementation, the three-dimensional printer may adjust temperatures of the hot end structure 10 and the hot bed 32. Specifically, the three-dimensional printer adjusts the temperature of the hot end structure 10 to heat a printing material to a molten state, and adjusts the temperature of the hot bed 32 to adhere the printing material extruded by the hot end structure 10 to the print panel 31. The three-dimensional printing head 1 is slidably connected to a first guide rail 12, and the three-dimensional printing head 1 is movable along a length direction of the first guide rail 12, that is, a displacement of the three-dimensional printing head 1 relative to the print panel 31 along the length direction of the first guide rail 12 is realized. Moreover, the hot bed 32 is slidably connected to a second guide rail 13, and the hot bed 32 moves along a length direction of the second guide rail 13, that is, a displacement of the three-dimensional printing head 1 relative to the print panel 31 along the length direction of the second guide rail 13 is realized. The length direction of the second guide rail 13 is perpendicular to the length direction of the first guide rail 12. Moreover, the first guide rail 12 is slidably connected to a third guide rail 14. By moving the first guide rail 12 along the third guide rail 14, the three-dimensional printer can realize displacements of the three-dimensional printing head 1 relative to the print panel 31 in the direction perpendicular to the length of the second guide rail 13 and in the direction perpendicular to the length of the first guide rail 12. That is, the three-dimensional printer can realize relative displacements between the three-dimensional printing head 1 and the print panel 31 in three mutually perpendicular directions, thereby printing a three-dimensional object.

It should be noted that the above terms "first" and "second" are merely for descriptive purposes and are not to be construed as indicating or implying relative importance.

## Claims

1. A hot end structure, comprising:
a hot end assembly, comprising a heat dissipation fin, a throat pipe, a heating block, and a nozzle that are connected in sequence;
a heating seat assembly, configured to heat the heating block; and
a fixing assembly, configured to detachably connect the hot end assembly to the heating seat assembly, wherein in a case that the hot end assembly is connected to the heating seat assembly, the heating block is fixedly attached to the heating seat assembly.

2. The hot end structure according to claim 1, wherein the fixing assembly is rotatably connected to the heating seat assembly; in a case that the fixing assembly rotates to a first preset position, the fixing assembly presses the heating block to be attached to the heating seat assembly.

3. The hot end structure according to claim 2, wherein in a case that the fixing assembly rotates to a second preset position, the heating block can be separated from the heating seat assembly.

4. The hot end structure according to any one of claims 1 to 3, wherein the heating seat assembly is configured to be fixedly connected to a three-dimensional printing head body.

5. The hot end structure according to claim 4, wherein the heating seat assembly is fixedly connected to the three-dimensional printing head body through a metal screw, the heat dissipation fin is provided with a magnetic element, and in a case that the hot end assembly is fixedly connected to the heating seat assembly, the magnetic element attracts the metal screw and is attached to a head of the metal screw.

6. The hot end structure according to any one of claims 1 to 5, wherein the heating block has a first plane, and the first plane is attached to a second plane of the heating seat assembly.

7. The hot end structure according to claim 6, wherein a first limit structure is provided on a plane of the heating seat assembly, and in a case that the first plane is attached to the second plane, the first limit structure abuts against an edge of the first plane, for limiting relative movement between the heating block and the heating seat assembly in at least one direction parallel to the first plane.

8. The hot end structure according to claim 6 or 7, wherein a second limit structure is provided on the first plane, and in the case that the first plane is attached to the second plane, the second limit structure abuts against an edge of the second plane, for limiting relative movement between the heating block and the heating seat assembly in at least one direction parallel to the first plane.

9. The hot end structure according to any one of claims 1 to 8, wherein the fixing assembly comprises:
a buckle member, rotatably connected to the heating seat assembly, wherein when the buckle member rotates to the first preset position, the buckle member is locked and presses the heating block to be attached to the heating seat assembly.

10. The hot end structure according to claim 9, wherein the buckle member comprises:
a first pressing block, rotatably connected to the heating seat assembly; and
a first wire spring, rotatably connected to the heating seat assembly, wherein the rotating shaft of the first pressing block and the rotating shaft of the first wire spring are parallel and located on both sides of the plane of the heating seat assembly attached to the heating block,
wherein when the first pressing block and the first wire spring rotate close to each other to the first preset position, the first pressing block and the first wire spring are buckled, the first wire spring limits movement of the first pressing block, and the first pressing block presses the heating block.

11. The hot end structure according to claim 4, wherein the heating seat assembly comprises:
a fixing seat, configured to be fixedly connected to the three-dimensional printing head body, wherein the fixing seat is made of a heat-insulating and high-temperature-resistant material; and
a heating seat, fixedly connected to the fixing seat and detachably connected to the hot end assembly.

12. The hot end structure according to any one of claims 1 to 11, wherein the hot end assembly being detachably connected to the heating seat assembly comprises: the heating block being detachably connected to the heating seat assembly.

13. The hot end structure according to any one of claims 1 to 12, wherein the heat dissipation fin is detachably connected to the three-dimensional printing head body.

14. A three-dimensional printing head, wherein the three-dimensional printing head comprises the hot end structure according to any one of claims 1 to 13 and a three-dimensional printing head body.

15. A three-dimensional printer, wherein the three-dimensional printer comprises the three-dimensional printing head according to claim 14, a print table, and a driving apparatus, wherein the three-dimensional printing head is arranged above the print table, the driving apparatus is configured to drive the three-dimensional printing head to generate a relative displacement with the print table, and the three-dimensional printing head is configured to extrude a material to print a model.
